(19) Europäisches Patentamt
European Patent Office
Office européen des brevets

(11) Veröffentlichungsnummer: **0 638 612 A1**

# (12) EUROPÄISCHE PATENTANMELDUNG

(21) Anmeldenummer: **94112170.9**

(51) Int. Cl.[6]: **C09B 5/00**

(22) Anmeldetag: **04.08.94**

(30) Priorität: **10.08.93 DE 4326773**

(43) Veröffentlichungstag der Anmeldung:
**15.02.95 Patentblatt 95/07**

(84) Benannte Vertragsstaaten:
**BE CH DE ES FR GB IT LI**

(71) Anmelder: **BASF Aktiengesellschaft**
**Carl-Bosch-Strasse 38**
**D-67063 Ludwigshafen (DE)**

(72) Erfinder: **Berggmann, Udo, Dr.**
**Am Bildstock 21**
**D-64625 Bensheim (DE)**
Erfinder: **Schlueter, Harald**
**Karl-Gayer-Strasse 14**
**D-67273 Weisenheim (DE)**
Erfinder: **Schmitt, Michael, Dr.**
**Bachweg 9a**
**D-67549 Worms (DE)**

## (54) Polycyclische Küpenfarbstoffe.

(57) Polycyclische Küpenfarbstoffe der allgemeinen Formel I

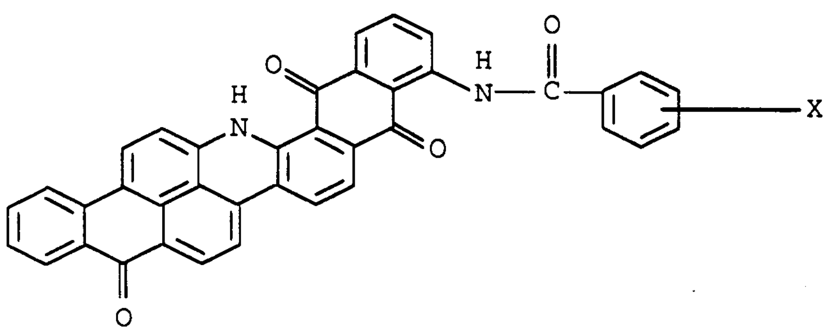

I

in der X Wasserstoff, $C_1$-$C_4$-Alkyl, $C_1$-$C_4$-Alkoxy, Halogen oder Nitro bedeutet, erhältlich durch Umsetzung von (9)-Benzo-5-aminoanthrachinonyl(2,1-h)-8-azapyrenon-3(II)

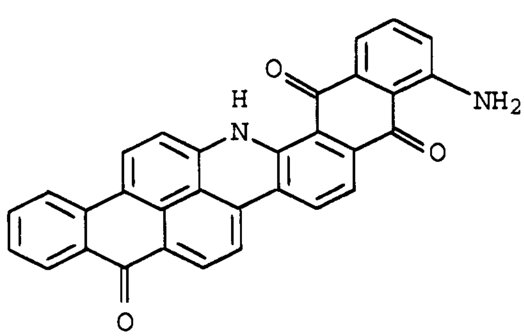

II

mit einem Benzoylchlorid der Formel III

EP 0 638 612 A1

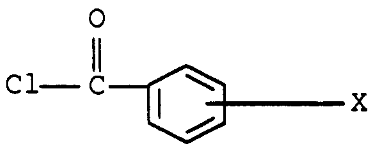

III

in einem dipolar aprotischen Lösungsmittel.

Die vorliegende Erfindung betrifft polycyclische Küpenfarbstoffe der allgemeinen Formel I

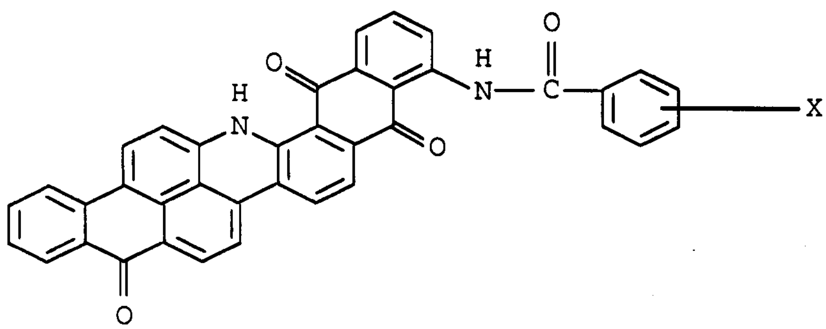

I

in der X Wasserstoff, $C_1$-$C_4$-Alkyl, $C_1$-$C_4$-Alkoxy, Halogen oder Nitro bedeutet, erhältlich durch Umsetzung von (9)-Benzo-5-aminoanthrachinonyl(2,1-h)-8-azapyrenon-3(II)

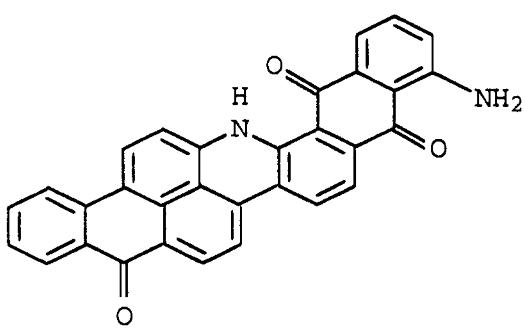

II

mit einem Benzoylchlorid der Formel III

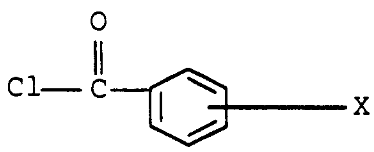

III

in einem dipolar aprotischen Lösungsmittel.

Weiterhin betrifft die Erfindung die Herstellung dieser Küpenfarbstoffe.

Die Küpenfarbstoffe der Formel I werden bekanntermaßen zum Färben von Baumwolle und Baumwolle-Polyester-Mischgeweben in hochechten Olivtönen verwendet. Von besonderem Interesse ist dabei der unsubstituierte Küpenfarbstoff I (X = Wasserstoff; CAS-Nr. 69515).

Bekanntes Herstellverfahren für die Küpenfarbstoffe I ist die Kondensation des Azapyrenons II mit einem Benzoylchlorid III in Nitrobenzol (US-A-1 850 562 und 2 530 010 sowie DRP 520 876) oder o-Dichlorbenzol (BIOS Final Report 1493, S. 32) als Lösungsmittel.

Nachteilig bei dieser Vorgehensweise ist jedoch, daß nach der Isolierung der hergestellten Küpenfarbstoffe, die im allgemeinen durch Filtration oder Abdestillieren des Lösungsmittels erfolgt, Restmengen der genannten Lösungsmittel am Produkt anhaften, die aufgrund der Toxizität vollständig entfernt werden müssen, was nur durch eine zeit- und energieaufwendige Wasserdampfdestillation möglich ist. Zudem muß die Kondensation in Gegenwart großer Lösungsmittelmengen durchgeführt werden, woraus eine niedrige Raum-Zeit-Ausbeute resultiert.

Der Erfindung lag daher die Aufgabe zugrunde, ein Verfahren bereitzustellen, welches die genannten Nachteile nicht aufweist und Küpenfarbstoffe der Formel I in vorteilhafter Weise zugänglich macht.

Demgemäß wurden die eingangs definierten Küpenfarbstoffe I gefunden.

Weiterhin wurde das hierdurch definierte Verfahren zur Herstellung dieser Küpenfarbstoffe gefunden.

Geeignete Reste X sind im einzelnen z.B. Ethyl, n- und iso-Propyl, n-, iso- und sec.-Butyl, Ethoxy, Propoxy, Butoxy, Fluor, Brom und Nitro, besonders Methyl, Methoxy und Chlor und ganz besonders

Wasserstoff.

Die erfindungsgemäßen Küpenfarbstoffe I, die durch Kondensation von II mit III in dipolar aprotischen Lösungsmitteln erhältlich sind, ergeben überraschenderweise bei sonst gleichem Echtheitsniveau deutlich grünere und farbtonreinere Olivfärbungen als die Farbstoffe, die nach den herkömmlichen Herstellverfahren erhalten werden und die aufgrund ihrer brauneren Nuance als Olivfarbstoffe nicht attraktiv sind.

Beispiele für erfindungsgemäß zu verwendende dipolar aprotische Lösungsmittel sind neben Sulfoxiden und Sulfonen vor allem Carbonsäureamide, insbesondere aliphatische Carbonsäureamide, Lactame und cyclische Harnstoffderivate.

Im einzelnen seien beispielsweise Dimethylsulfoxid, Sulfolan, Dimethylformamid, Diethylformamid, Dibutylformamid, Dimethylacetamid, Diethylacetamid, Dibutylacetamid, N-Formylmorpholin, N-Methylpyrrolidon, 1,3-Dimethylimidazolidin-2-on und 1,3-Dimethyltetrahydropyrimidin-2-on genannt.

Bevorzugt ist hierbei Dimethylformamid, besonders bevorzugt sind 1,3-Dimethylimidazolidin-2-on und 1,3-Dimethyltetrahydropyrimidin-2-on und ganz besonders bevorzugt N-Methylpyrrolidon und Dimethylacetamid.

Weiterhin vorteilhaft ist, daß beim Einsatz der erfindungsgemäßen Lösungsmittel ein deutlich konzentrierterer Reaktionsansatz ermöglicht wird als bei der Verwendung von Nitrobenzol und o-Dichlorbenzol, wodurch die Raum-Zeit-Ausbeute mehr als verdoppelt werden kann. Zudem können am Produkt anhaftende Lösungsmittelreste durch einfaches Waschen oder Ausrühren mit Wasser leicht und vollständig entfernt werden.

Beim erfindungsgemäßen Herstellverfahren werden in der Regel 1 bis 7, vorzugsweise 1 bis 5 kg Lösungsmittel je kg Azapyrenon II eingesetzt. Selbstverständlich können auch größere Mengen Lösungsmittel (Gewichtsverhältnis z.B. bis zu 10:1 oder 15:1 oder größer) eingesetzt werden, jedoch wird die Aufarbeitung bei zu großen Lösungsmittelmengen unwirtschaftlich.

Das Molverhältnis Benzoylchlorid III zu Azapyrenon II beträgt im allgemeinen 3:1 bis 1:1.

Die Umsetzung kann in An- oder Abwesenheit säurebindender Mittel wie Calciumoxid, Calciumcarbonat, Magnesiumoxid, Natriumdihydrogenphosphat, Dinatriumhydrogenphosphat, Natriumformiat, Natriumacetat, besonders Natriumhydrogencarbonat, Natriumcarbonat und Trinatriumphosphat durchgeführt werden.

Werden säurebindende Mittel eingesetzt, so richten sich deren Mengen nach der Menge an Benzoylchlorid III. Übliche Mengen sind 1 bis 3 Moläquivalente säurebindendes Mittel pro mol III.

Die Reaktionstemperatur betragt in der Regel 100 bis 200 °C, bevorzugt 140 bis 170 °C. Temperaturen oberhalb des Siedepunktes des gewählten Lösungsmittels können durch das Arbeiten unter Eigendruck in einer geschlossenen Apparatur erreicht werden, die drucklose Arbeitsweise ist jedoch vorzuziehen.

Verfahrenstechnisch geht man zweckmäßigerweise so vor, daß man das Lösungsmittel vorlegt und II und III sowie gegebenenfalls ein säurebindendes Mittel zugibt, die Mischung unter Rühren auf die gewünschte Temperatur erhitzt und in der Regel 0,5 bis 20 h, vorzugsweise 2 bis 6 h bei dieser Temperatur hält.

Die Isolierung der Küpenfarbstoffe kann direkt aus der gegebenenfalls abgekühlten Reaktionssuspension durch Abfiltrieren, z.B. über eine Filterpresse, Waschen mit Wasser und anschließendes Trocknen erfolgen. Dabei wird das Lösungsmittel zweckmäßigerweise aus den Mutter- und Waschlaugen durch Destillation zurückgewonnen.

Das Reaktionsgemisch kann aber auch, z.B. in einem Schaufeltrockner, gegebenenfalls im Vakuum und gegebenenfalls nach Zusatz eines säurebindenden Mittels zur Trockene eingedampft werden. Der erhaltene Küpenfarbstoff kann dann nach Anrühren in Wasser ebenfalls z.B. über eine Filterpresse isoliert werden. Das beim Eindampfen erhaltene, regenerierte Lösungsmittel kann, gewünschtenfalls nach nochmaliger Destillation, in den Prozeß zurückgeführt werden.

Mit Hilfe des erfindungsgemäßen Verfahrens können die Küpenfarbstoffe der Formel I vorteilhaft und in einer Reinheit erhalten werden, wie sie nach den bekannten Verfahren nicht zugänglich waren. Die erfindungsgemäßen Küpenfarbstoffe I ergeben deutlich grünstichigere und farbtonreinere Olivfärbungen als der Stand der Technik.

Beispiele

A) Herstellung von erfindungsgemäßen Küpenfarbstoffen I

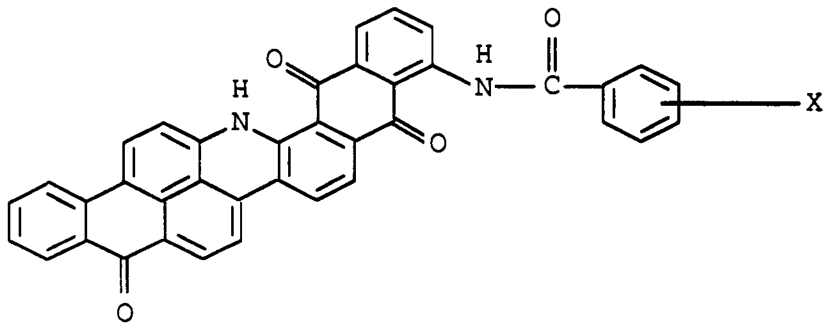

I

In x g des Lösungsmittels L wurden a g (9)-Benzo-5-aminoanthrachinonyl(2,1-h)-8-azapyrenon(3) (II), b g des entsprechenden Benzoylchlorids III und gegebenenfalls c g des säurebindenden Mittels M unter Rühren eingetragen. Die erhaltene Mischung wurde dann in 3 h auf 150 - 155 °C erhitzt (Rückfluß) und 3 h (Beispiele 1 bis 4) bzw. 5 h (Beispiele 5 bis 7 und Vergleichsbeispiel) bei dieser Temperatur gerührt.

Die Aufarbeitung des Reaktionsgemisches auf die Küpenfarbstoffe I wurde nach einer der 3 folgenden Varianten durchgeführt:

Variante A:

Die Suspension wurde auf 40 °C abgekühlt und über eine Nutsche filtriert. Der Filterrückstand wurde mit 2000 g Warmwasser (60 °C) neutral und lösungsmittelfrei gewaschen und bei 60 °C im Vakuum getrocknet.

Variante B:

Die Suspension wurde nach dem Abkühlen in einen Schaufeltrockner überführt und im Vakuum unter Abdestillieren des Lösungsmittels zur Trockene eingeengt. Der Rückstand wurde 1 h in 2000 g Wasser bei 60 °C gerührt. Anschließend wurde diese Suspension über eine Nutsche filtriert. Der Filterrückstand wurde mit 2000 g Wasser salzfrei und neutral gewaschen und bei 60 °C im Vakuum getrocknet.

Variante C:

Die Suspension wurde auf 80 °C abgekühlt, in einen Rotationsverdampfer überführt, mit 80 g Natriumcarbonat (Beispiele 5 bis 7) bzw. 480 g Natriumhydrogencarbonat (Vergleichsbeispiel) neutralisiert und im Vakuum zur Trockene eingeengt. Der Rückstand wurde 1 h in 2000 g Wasser bei 60 °C gerührt, abfiltriert, mit 2000 g Warmwasser (60 °C) neutral und salzfrei gewaschen und bei 60 °C im Vakuum getrocknet.

Weitere Einzelheiten zu diesen Versuchen sowie zu der zum Vergleich in Nicrobenzol durchgeführten Herstellung (Beispiel V) sowie deren Ergebnisse sind der nachstehenden Tabelle 1 zu entnehmen.

Tabelle 1: Herstellung von Küpenfarbstoffen I

| Bsp. | X | a g II | b g III | Lösungsmittel | | säurebindendes Mittel | | Aufarbeitungsvariante | Ausbeute | Färbung von Baumwolle |
|---|---|---|---|---|---|---|---|---|---|---|
| | | | | L | x g | M | c g | | [g] | |
| 1 | H | 375 | 287 | N-Methyl-pyrrolidon | 1000 | - | - | A | 430 | grünstichiges Oliv |
| 2 | H | 375 | 290 | 1,3-Dimethyl-imidazolidin-2-on | 1000 | - | - | A | 410 | grünstichiges Oliv |
| 3 | H | 400 | 307 | Dimethylacetamid | 1000 | $Na_2CO_3$ | 120 | B | 410 | grünstichiges Oliv |
| 4 | H | 400 | 307 | Dimethylacetamid | 1000 | $Na_3PO_4$ | 120 | B | 415 | grünstichiges Oliv |
| 5 | H | 150 | 115 | Dimethylacetamid | 400 | $Na_2CO_3$ * | 80 | C | 410 | grünstichiges Oliv |
| V | H | 400 | 267 | Nitrobenzol | 2400 | $NaHCO_3$ * | 480 | C | 420 | brauneres, trüberes Oliv |
| 6 | 3-$CH_3$ | 150 | 120 | Dimethylacetamid | 400 | $Na_2CO_3$ * | 80 | C | 420 | grünstichiges Oliv |
| 7 | 4-Cl | 150 | 120 | Dimethylacetamid | 400 | $Na_2CO_3$ * | 80 | C | 417 | grünstichiges Oliv |

* M wurde erst bei der Aufarbeitung zugegeben

B) Beurteilung der Koloristik anhand erhaltener Färbungen

Mit den erhaltenen Küpenfarbstoffen I wurde Baumwollgewebe nach dem Pad-Steam-Verfahren (F1) bzw. dem Ausziehverfahren (F2) gefärbt. Die Färbungen wurden anschließend zur Bestimmung der CIELAB-Werte Chroma C* und Farbwinkel H mit dem Texflash/Datacolor-Gerät Typ 3880 unter Verwendung

der Normlichtart D 65 vermessen (Meßwinkel 0° ≙ diffuse Beleuchtung, Meßblende 30 mm, Meßfleck 24 mm).

Pad-Steam-Färbung (F1):

Abgekochtes, gut benetzbares Baumwollgewebe wurde in eine wäßrige Klotzflotte getaucht, die pro Liter 50 g der folgenden wäßrigen Farbstoffzübereitung enthielt:
13 g Küpenfarbstoff I
3,75 g Dispergiermittel
10 g Frostschutzmittel
0,5 g Konservierungsmittel
22,75 g Wasser
Danach wurde das Gewebe in einem Zweiwalzenfoulard auf 80 % Rest feuchte abgequetscht und nachgetrocknet. Nach praxisüblicher Aufbringung von alkalischer Dithionitlösung wurde der Farbstoff durch Dämpfen in einer luftfreien Sattdampfatmosphäre 60 sec fixiert. Die kontinuierliche Fertigstellung erfolgte in einer Breitwaschmaschine durch Spülen, Oxidieren, Seifen und nochmaliges Spülen.

Ausziehfärbung (F2):

Abgekochtes, gut benetzbares Baumwollgewebe wurde in einem Färbebad (Flottenverhältnis 1:10) gefärbt, das 26 ml/l Natronlauge 38°Bé und 9 g/l Natriumdithionit (90 %ig) und, bezogen auf das Substratgewicht, 4 Gew.-% einer Farbstoffmischung aus 40 Teilen Küpenfarbstoff I, 60 Teilen Dispergiermittel und 1 g/l Egalisierungshilfsmittel enthielt.

Nach 40 minütigem praxisüblichen Färben bei 60°C wurde das Gewebe gespült, oxidiert, geseift und erneut gespült.

In allen Fällen wurden tiefe, egale, grunstichige Olivfärbungen ohne störende Markierung unreifer Baumwolle und mit sehr guten Echtheitseigenschaften erhalten.

Weitere Angaben zu den koloristischen Eigenschaften sind in Tabelle 2 zusammengestellt.

Tabelle 2

| Koloristische Daten von Küpenfarbstoffen I | | | | | |
|---|---|---|---|---|---|
| Farbstoff aus Bsp. | Färbeverfahren | Chroma C* | △ C | Farbwinkel H [°] | △ H [°] |
| V | F1 | 14,73 | - | 103,7 | - |
| 3 | F1 | 14,40 | - 0,33 | 108,4 | 1,20 |
| 5 | F1 | 14,25 | - 0,48 | 109,0 | 1,34 |
| | | | | | |
| V | F2 | 14,85 | - | 102,6 | - |
| 3 | F2 | 15,72 | 0,87 | 109,8 | 1,92 |
| 5 | F2 | 15,50 | 0,65 | 110,6 | 2,11 |

Die mit den erfindungsgemäßen Farbstoffen erhaltenen Färbungen zeigen höhere Farbwinkelwerte, sind also grüner und erscheinen dem Auge brillanter.

**Patentansprüche**

**1.** Polycyclische Küpenfarbstoffe der allgemeinen Formel I

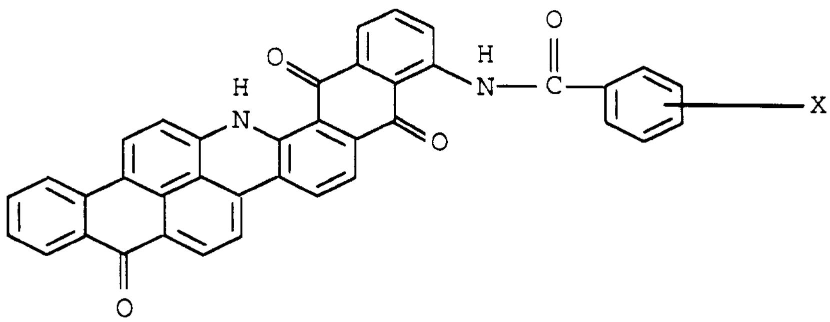

I

in der X Wasserstoff, $C_1$-$C_4$-Alkyl, $C_1$-$C_4$-Alkoxy, Halogen oder Nitro bedeutet, erhältlich durch Umsetzung von (9)-Benzo-5-aminoanthrachinonyl(2,1-h)-8-azapyrenon-3(II)

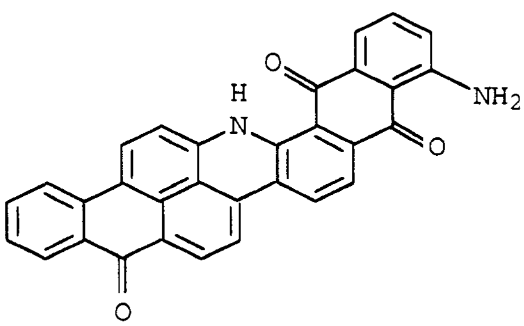

II

mit einem Benzoylchlorid der Formel III

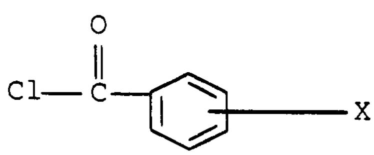

III

in einem dipolar aprotischen Lösungsmittel.

**2.** Polycyclischer Küpenfarbstoff der Formel I nach Anspruch 1, in der X Wasserstoff bedeutet.

**3.** Polycyclische Küpenfarbstoffe nach Anspruch 1, bei denen als Lösungsmittel Carbonsäureamide, Lactame, cyclische Harnstoffderivate, Sulfoxide oder Sulfone verwendet werden.

**4.** Verfahren zur Herstellung der polycyclischen Küpenfarbstoffe gemäß den Ansprüchen 1 bis 3, dadurch gekennzeichnet, daß man (9)-Benzo-5-aminoanthrachinonyl(2,1-h)-8-azapyrenon-3(II) in einem dipolar aprotischen Lösungsmittel mit einem Benzoesäurechlorid (III) umsetzt.

Europäisches Patentamt

# EUROPÄISCHER RECHERCHENBERICHT

Nummer der Anmeldung

EP 94112170.9

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 6) |
| D,A | US - A - 2 530 010 (FIORONI) * Spalte 3, Beispiel 1 * -- | 1,3,4 | C 09 B 5/00 |
| A | AT - B - 233 695 (CIBA AKTIENGESELLSCHAFT) * Seite 1, Zeile 21 - Seite 2, Zeile 20; Seite 4, Zeilen 7-15 * & GB-A-987 965 ---- | 1,3,4 | |
| | | | RECHERCHIERTE SACHGEBIETE (Int. Cl 6) |
| | | | C 09 B |

Der vorliegende Recherchenbericht wurde für alle Patentansprüche erstellt.

| Recherchenort | Abschlußdatum der Recherche | Prüfer |
|---|---|---|
| WIEN | 20-10-1994 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62